# EUROPÄISCHE PATENTSCHRIFT

(11) **EP 3 962 325 B1**
(45) Veröffentlichungstag und Bekanntmachung des Hinweises auf die Patenterteilung: **13.12.2023**
(21) Anmeldenummer: 20718624.8
(22) Anmeldetag: 08.04.2020
(51) Int. Cl.: A47G 1/20, A47G 1/16, F16B 43/02, F16B 45/00

(54) **WANDHAKEN, BEFESTIGUNGSANORDNUNG MIT DEM WANDHAKEN UND VERFAHREN ZUM BEFESTIGEN DES WANDHAKENS**
WALL HOOK, SECURING ASSEMBLY COMPRISING THE WALL HOOK, AND METHOD FOR SECURING THE WALL HOOK
CROCHET MURAL, DISPOSITIF DE FIXATION AVEC LE CROCHET MURAL ET PROCÉDÉ DE FIXATION DU CROCHET MURAL

(30) Priorität: 02.05.2019 DE 102019111283; 03.04.2020 DE 102020109317
(43) Veröffentlichungstag der Anmeldung: 09.03.2022
(73) Patentinhaber: fischerwerke GmbH & Co. KG, 72178 Waldachtal (DE)
(72) Erfinder: DALY, Aaron, 72285 Pfalzgrafenweiler (DE)
(86) Internationale Anmeldenummer: PCT/EP2020/059955
(87) Internationale Veröffentlichungsnummer: WO 2020/221567

(56) Entgegenhaltungen:
- DE-A1- 10 031 888
- DE-A1-102004 039 233
- DE-A1-102011 053 675
- US-A- 3 974 557
- US-A- 4 708 552

## Beschreibung

Die Erfindung betrifft einen Wandhaken mit den Merkmalen des Anspruchs 1, eine Befestigungsanordnung nach Anspruch 8 sowie ein Verfahren zum Befestigen des Wandhakens nach Anspruch 9.

Es sind einstückige Wandhaken aus Metall bekannt, die einen geraden, sich entlang einer Längsachse erstreckenden Schaft aufweisen. Der Schaft ist üblicherweise als Nagel oder Schraube ausgebildet. Bei diesen Wandhaken ist an einem hinteren Ende ein rechtwinklig radial von der Längsachse des Schafts abstehendes Hakenteil angeformt. Wird ein derartiger Wandhaken mit einem Schraubengewinde in einen Verankerungsgrund geschraubt, und soll das Hakenteil in eine vorgegebene Richtung ausgerichtet werden, beispielsweise an einer Wand vertikal nach oben, so ist dies nur bei gleichzeitiger Änderung des Abstands des Hakenteils vom Verankerungsgrund möglich, da der Wandhaken beim Ausrichten in den Verankerungsgrund gleichzeitig ein- oder ausgeschraubt wird. Eine beliebige Ausrichtung des Hakenteils in einem bestimmten Abstand vom Verankerungsgrund ist somit nicht möglich.

Das Gebrauchsmuster DE 295 19 158 U1 zeigt dagegen einen mehrteiligen Wandhaken, der in einem vorgegebenen Abstand zum Verankerungsgrund beliebig ausgerichtet werden kann. Der Wandhaken besteht aus einer Schraube als Befestigungselement, auf die ein gesondertes Hakenelement drehbar aufgesetzt ist. Das Hakenelement ist einstückig und weist eine Schaftaufnahme zur Aufnahme der Schraube auf. Von der Schaftaufnahme steht ein Hakenteil am hinteren Ende des Hakenelements radial von der Längsachse nach außen auf eine Seite von der Schaftaufnahme des Hakenelements ab. An einem vorderen Ende des Hakenelements ist an der Schaftaufnahme ein Flansch mit kurzen, radial verlaufenden Rippen angeordnet. Wird der Flansch nach dem Ausrichten des Hakenteils mit der Schraube gegen einen Verankerungsgrund verspannt, dann werden die Rippen oberflächlich gegen den Verankerungsgrund gedrückt und halten das Hakenteil durch Reibung drehfest am Verankerungsgrund. Eine Justage des Abstands des Hakenteils vom Verankerungsgrund ist allerdings nicht möglich. Das Dokument DE 10 2004039233 A1 offenbart einen Wandhaken gemäß dem Oberbegriff des Anspruchs 1.

Aufgabe der Erfindung ist es daher, einen Wandhaken vorzuschlagen, bei dem der Abstand und die Ausrichtung des Hakenteils beliebig und voneinander unabhängig einstellbar sind.

Diese Aufgabe wird erfindungsgemäß durch einen Wandhaken mit den Merkmalen des Anspruchs 1, eine Befestigungsanordnung nach Anspruch 8 und ein Verfahren mit den Merkmalen des Anspruchs 9 gelöst. Der erfindungsgemäße Wandhaken zum Befestigen in einem Verankerungsgrund umfasst ein Befestigungselement und ein Hakenelement. Das Befestigungselement weist einen sich in Richtung einer Längsachse des Wandhakens erstreckenden Schaft auf, der in Richtung der Längsachse lang gestreckt ist, das heißt, dass die Länge des Befestigungselements in Richtung der Längsachse größer als seine Abmessung radial zur Längsachse ist. Das Befestigungselement kann eine Schraube oder ein Nagel sein. Vorzugsweise ist das Befestigungselement eine Schraube mit einem Schaft, an dem ein Gewinde angeordnet ist, das sich in Längsrichtung erstreckt, sich also um die Längsachse windet. Der Schaft geht insbesondere in einen Schraubenkopf über, der einen größeren Durchmesser als der Schaft mit dem Gewinde aufweist. Das Hakenelement weist eine Schaftaufnahme zur Aufnahme des Befestigungselements auf, mit der das Hakenelement so auf den Schaft des Befestigungselements aufsteckbar ist, dass ein Hakenteil des Hakenelements radial zur Längsachse auf eine Seite des Hakenelements nach außen absteht. "Aufsteckbar" meint hier insbesondere, dass das Hakenelement entlang der Längsachse oder durch eine Bewegung radial zur Längsachse auf das Befestigungselement, insbesondere auf dessen Schaft, aufgesteckt werden kann. "Aufsteckbar" kann aber beispielsweise auch bedeuten, dass das Hakenelement im Bereich eines Gewindes des Befestigungselements geschraubt und in einem gewindefreien Bereich geschoben wird. Die Schaftaufnahme ist insbesondere derart gestaltet, dass sie den Schaft des Befestigungselements in Umfangsrichtung um mehr als die Hälfte umschließt. Insbesondere ist die Schaftaufnahme als eine Art Hülse ausgeführt, die insbesondere ringförmig und vollständig geschlossen ist. Das Hakenteil ist Teil des Hakenelements und steht radial zur Längsachse seitlich vom Schaft des Befestigungselements ab, wenn das Hakenelement mit der Schaftaufnahme auf den Schaft des Befestigungselements aufgesteckt, beziehungsweise der Schaft in die Schaftaufnahme eingebracht ist. Das Hakenteil ist relativ zum Befestigungselement in Umfangsrichtung um die Längsachse drehbar, so dass es durch Drehen um die Längsachse, und somit um den Schaft, ausgerichtet werden kann. Das Hakenteil ist insbesondere an einem in Einbringrichtung des Hakenelements in den Verankerungsgrund hinteren Bereich des Hakenelements angeordnet, insbesondere am hinteren Ende des Hakenelements.

Erfindungsgemäß umfasst der Wandhaken ein Anschlagelement, das als Anschlag beziehungsweise als Widerlager für das Hakenteil dient. Das Anschlagelement erstreckt sich parallel zur Längsachse vom Hakenelement weg und weist eine radiale Erstreckung zur Längsachse auf, die, bezogen auf die Richtung, in die das Hakenteil radial zur Längsachse absteht, kleiner als die des Hakenteils ist. Das bedeutet, dass das Hakenteil auf der Seite, auf die das Hakenteil radial zur Längsachse nach außen absteht, in radialer Richtung nach außen über das Anschlagelement übersteht.

Um zu gewährleisten, dass das Hakenteil unabhängig vom Anschlagelement ausgerichtet werden kann, ist das Hakenteil erfindungsgemäß bereits vor dem Befestigen des Wandhakens im Verankerungsgrund relativ zum Anschlagelement um die Längsachse drehbar. Alternativ ist das Anschlagelement mit dem Hakenelement mittels einer Solltrennstelle verbunden, die beim Befestigen des Wandhakens im Verankerungsgrund durch Drehen um die Längsachse getrennt wird oder die zumindest ein Verdrehen des Hakenelements dann zulässt, wenn das Abstandselement beim Befestigen des Wandhakens in den Verankerungsgrund eingebracht ist. Mit "ausrichten" ist ein Drehen des Hakenteils um die Längsachse gemeint.

Beim Befestigen des Wandhakens dringt das dem Wandhaken in Richtung der Längsachse abgewandte vordere Ende des Anschlagelements direkt oder indirekt in den Verankerungsgrund ein, so dass das Anschlagelement zunächst teilweise, und insbesondere drehsicher, in den Verankerungsgrund eingebracht ist und das dem Wandhaken in Richtung der Längsachse zugewandte hintere Ende des Anschlagelements auf einen vom Anwender gewünschten Abstand zum Verankerungsgrund eingestellt werden kann. "Direkt eindringen" meint hier, dass das Abstandselement direkt mit dem Verankerungsgrund in Berührung kommt, während "indirekt eindringen" den Fall meint, dass das Abstandselement in ein Element eindringt, das im Verankerungsgrund angeordnet ist, beispielsweise in eine in ein Bohrloch eingebrachte Spreizhülse eines Spreizdübels. Wird beispielsweise eine Schraube als Befestigungselement in einen Holzbalken eingeschraubt, kann das Anschlagelement direkt in das Holz eindringen, so dass es direkt mit dem Holz in Eingriff gelangt. Ist dagegen der Verankerungsgrund eine Betonwand, so wird zur Befestigung des Wandhakens insbesondere ein Spreizdübel mit einer Spreizhülse aus Kunststoff verwendet, in den die Schraube des Wandhakens eingeschraubt wird. In diesem Fall dringt das Anschlagelement beim Einschrauben der Schraube in den Spreizdübel ein, so dass die Spreizhülse zwischen dem Beton und dem Anschlagelement angeordnet ist. In diesem Fall steht das Anschlagelement indirekt mit dem Verankerungsgrund in Eingriff.

Nachdem das Abstandselement in den Verankerungsgrund zumindest teilweise eingebracht ist, kann das Hakenteil aufgrund der erfindungsgemäßen Ausgestaltung des Wandhakens durch Drehen um die Längsachse ausgerichtet werden. Dabei ist das Anschlagelement insbesondere drehfest zum Verankerungsgrund gehalten, so dass es beim Drehen des Hakenteils nicht mitdreht. Das hintere Ende des Anschlagelements bildet den Anschlag, an dem das Hakenelement nach dem Befestigen anliegt und gegen den es verspannt ist. Das Abstandselement ist dann "drehfest" zum Verankerungsgrund im Verankerungsgrund eingebracht, wenn zum Drehen des Anschlagelements um die Längsachse ein größeres Drehmoment auf das Anschlagelement aufgebracht werden muss, als dies zum Drehen des Hakenteils um die Längsachse und relativ zum Anschlagelement erforderlich ist.

Beim Befestigen wird das Anschlagelement soweit in den Verankerungsgrund eingebracht, bis sich ein hinteres Ende des Anschlagelement in einem gewünschten vorgesehenen Abstand vom Verankerungsgrund befindet. Das insbesondere zum Verankerungsgrund drehfeste Anschlagelement bildet in dieser Stellung einen Anschlag für das Hakenelement, das relativ zum Anschlagelement um die Längsachse gedreht und ausgerichtet werden kann. Das Hakenelement kann mit dem Befestigungselement gegen das Anschlagelement verspannt werden, derart, dass zwischen dem Hakenelement und dem Anschlagelement eine Reibkraft wirkt, die ein ungewolltes Verdrehen des Hakenteils um die Längsachse verhindert.

Dies bedeutet, dass das Hakenteil in einem beliebigen Abstand vom Verankerungsgrund gegen das Anschlagelement verspannt werden kann, wobei das Anschlagelement als Widerlager und Abstandhalter für das Hakenteil wirkt, aber relativ zum Anschlagelement ausgerichtet werden kann, falls das Hakenteil beim Verspannen gegen das Anschlagelement, beispielsweise durch das Drehen einer als Befestigungselement verwendeten Schraube, in eine nicht vorgesehene, unerwünschte Position verdreht wird. Dabei wirkt zwischen dem Anschlagelement und dem Hakenelement eine Reibkraft die klein genug ist, um ein Drehen und Ausrichten des Hakenteils gegenüber dem Anschlagelement zu ermöglichen, die aber groß genug ist, damit das Hakenteil sich nicht durch sein Eigengewicht oder durch Erschütterungen ungewollt in eine nicht vorgesehene, unerwünschte Position verdreht.

Demnach wird zum Befestigen des Wandhakens in einem Verankerungsgrund erfindungsgemäß das Befestigungselement in den Verankerungsgrund eingebracht, wobei das Anschlagelement in direkten oder indirekten Eingriff mit dem Verankerungsgrund gelangt. Insbesondere ist das Anschlagelement dann drehfest zum Verankerungsgrund. Nach dem Einbringen des Anschlagelements wird das Hakenelement um die Längsachse und relativ zum Anschlagelement gedreht und ausgerichtet. Während oder nach diesen Schritten wird das Hakenelement in axialer Richtung gegen das Anschlagelement verspannt, derart, dass zwischen dem Hakenelement und dem Anschlagelement eine Reibkraft wirkt, die ein ungewolltes Verdrehen des Hakenteils um die Längsachse verhindert.

Beispielsweise lässt sich das Hakenteil zur Montage eines Bildes an einer vertikalen Wand, nachdem ein Teil des Befestigungselements und des Anschlagelements in die als Verankerungsgrund wirkende Wand eingebracht wurden, vertikal nach oben abstehend ausrichten, wenn der Schaft des Befestigungselements horizontal ausgerichtet ist. Durch das axiale Verspannen des Hakenelements gegen das Abstandselement wirkt eine Reibkraft zwischen den verspannten Elementen, die ein unbeabsichtigtes Verdrehen des Hakenteils um die Längsachse, beispielsweise beim Einhängen einer Öse eines Bildes, verhindert. An das Hakenteil kann dann beispielsweise eine Öse eines aufzuhängenden Bildes eingehängt werden, so dass die Öse nicht in Richtung des Hakenteils axial vom Schaft und/oder der Schaftaufnahme abgezogen werden kann, sondern so weit in der Richtung, in die das Hakenteil vom Schaft absteht, vom Schaft und/oder der Schaftaufnahme entfernt werden muss, damit sie über das Hakenteil hinweg vom Schaft und/oder der Schaftaufnahme gelöst und auf diese Weise aus dem Wandhaken beziehungsweise aus dem Hakenelement ausgehängt werden kann.

Das Anschlagelement des erfindungsgemäßen Wandhakens kann erfindungsgemäß mit dem Hakenelement mittels einer Solltrennstelle verbunden sein. Die Solltrennstelle erlaubt die Herstellung des Hakenelements mit dem Anschlagelement als ein Teil, also gemeinsam und einstückig, insbesondere im Spritzgussverfahren aus Kunststoff. Die Sollbruchstelle hält das Anschlagelement und das Hakenelement verliersicher zusammen, was für eine Herstellung, Verpackung und Transport des Wandhakens vorteilhaft ist. Bei der eigentlichen Befestigung des Wandhakens kann die Verbindung dann gelöst werden. Erfindungsgemäß wird beim oder nach dem Einbringen des Befestigungselements und des Anschlagelements in den Verankerungsgrund die Solltrennstelle, die zwischen dem Anschlagelement und dem Hakenelement angeordnet ist, durchtrennt, so dass nach dem Durchtrennen das Hakenteil relativ zum Anschlagelement um die Längsachse drehbar ist. Der Ausdruck "durchtrennen" umfasst daher in diesem Zusammenhang auch den Fall, dass das Anschlagelement nicht vollständig vom Hakenelement losgelöst wird, sondern die Solltrennstelle nur soweit geschwächt wird, dass das Hakenteil zum Anschlagelement um die Längsachse drehbar ist, wobei das Material der Solltrennstelle beispielsweise plastisch verformt wird. Insbesondere ist das Befestigungselement eine Schraube und das Durchtrennen erfolgt beim Einschrauben der Schraube in den Verankerungsgrund. Insbesondere dreht dabei das Hakenelement mit der Schraube beim Einschrauben mit, insbesondere aufgrund von Reibung zwischen dem Hakenelement und einem Kopf der Schraube, der flächig mit seiner Unterseite am Hakenelement anliegt, wohingegen das Anschlagelement in Eingriff mit dem Verankerungsgrund gelangt und dadurch drehfest am Verankerungsgrund gehalten ist. Dabei wird dann das Hakenelement beim Eindrehen der Schraube relativ zum Anschlagelement um die Längsachse gedreht, wobei die Solltrennstelle durchtrennt wird. Beispielsweise besteht die Solltrennstelle aus einer dünnen Spritzhaut oder aus einzelnen dünnen Stegen.

Der erfindungsgemäße Wandhaken bildet mit dem Spreizdübel ein Befestigungssystem und mit dem Spreizdübel oder allein mit dem Verankerungsgrund eine Befestigungsanordnung.

Um ein Eindringen des Anschlagelements in und ein Eingreifen des Anschlagelements mit dem Verankerungsgrund zu erleichtern, verjüngt sich das Anschlagelement an seinem dem Hakenteil abgewandten vorderen Ende keil- oder hülsenförmig. Insbesondere bildet das Anschlagelement eine Art Dorn, der eine Spitze zum Eindringen in den Verankerungsgrund oder in eine Spreizhülse aufweist, der den Schaft des Befestigungselements zumindest teilweise umgreift. Insbesondere ist das Anschlagelement ein Hohlzylinder mit einer hohlkegelförmigen Spitze, das den Schaft des Befestigungselement in seinem Hohlraum aufnimmt.

Weiterhin ist bevorzugt, dass die Länge des Anschlagelements in Richtung der Längsachse größer als seine Erstreckung radial zur Längsachse ist. Das heißt, dass der Radius eines das Anschlagelement umschreibenden Umkreises kleiner als die axiale Länge des Anschlagelements in Richtung der Längsachse ist. Dabei umschreibt der Umkreis insbesondere das Anschlagelement in einem dem Hakenteil abgewandten Bereich des Anschlagelements, insbesondere in einem vorderen, beim Montieren dem Verankerungsgrund zugewandten Drittel. Insbesondere erstreckt sich das Anschlagelement entlang der Längsachse über eine Länge, die größer, insbesondere um ein Mehrfaches größer ist, als ein Durchmesser des in der Schaftaufnahme aufzunehmenden Schafts des Befestigungselements. "Mehrfach" meint hier insbesondere mindestens das 1,5-fache, insbesondere mindestens das 2,0-fache. Insbesondere erstreckt sich das gesamte Anschlagelement in Richtung der Längsachse mit einer Länge, die dem 1,0-fachen bis 2,5-fachen, insbesondere dem 1,5-fachen bis 2,0-fachen, des Außendurchmessers eines Kopfs des Befestigungselements entspricht. Ein langes Anschlagelement ermöglicht eine Justage des Abstands vom Hakenteil zum Verankerungsgrund über einen großen Abstandsbereich.

Vorzugsweise weist das Anschlagelement Nuten und/oder Rippen zur Drehsicherung auf, die in Richtung der Längsachse verlaufen. Die Nuten und/oder Rippen sind an der Oberfläche angeordnet und wirken als Drehsicherungseinrichtungen, die direkt oder indirekt formschlüssig in den Verankerungsgrund eingreifen. Die Nuten und/oder Rippen sichern das Anschlagelement im Verankerungsgrund gegen ein Drehen um die Längsache beim Ausrichten des Hakenteils, da die Außenseite des Anschlagelements durch die Ausbildung dieser Elemente keinen kreisrunden Querschnitt und/oder keine glatte Oberfläche aufweist. Die "Oberfläche" ist die Fläche des Anschlagelements, die beim direkten Einbringen mit dem Verankerungsgrund direkt in Kontakt gelangt.

Bei einer Ausgestaltungsform des erfindungsgemäßen Wandhakens ist das Anschlagelement mit dem Hakenelement mittels einer form- und/oder reibschlüssigen Verbindung verbunden, insbesondere axialfest. Die Verbindung kann insbesondere als eine Art Steckverbindung ausgeführt sein. Beispielsweise greifen hohlzylindrische Rohrstücke reibend ineinander, so dass die einzelnen Teile allein durch Reibung verliersicher, insbesondere axialfest, aber relativ zueinander, um die Längsachse drehbar, verbunden sind. Eine formschlüssige Verbindung kann beispielsweise durch eine hinterschnittene Feder realisiert werden, in die eine korrespondierende Gegenfeder eingreift, wie dies von Ringschnappverbindungen bekannt ist. Bei einer reib- und/oder formschlüssigen Verbindung können die beiden zu verbindenden Elemente nach der Herstellung der Elemente oder bei der Herstellung zumindest eines der Elemente in einem Spritzgussverfahren durch Umspritzen vereint werden.

Das Anschlagelement und das Hakenelement werden vorzugsweise aus dem gleichen Material hergestellt, insbesondere aus Kunststoff im Spritzgussverfahren, wodurch eine kostengünstige Herstellung möglich ist. Beispielsweise bestehen das Anschlagelement und das Hakenelement aus einem Polyamid mit Glasfaserverstärkung. In diesem Fall sind das Haken- und das Anschlagelement insbesondere einstückig mit einer Solltrennstelle gemeinsam im Spritzgussverfahren hergestellt.

Alternativ können das Anschlagelement und das Hakenelement aus unterschiedlichen Materialien bestehen. So besteht das Hakenelement beispielsweise aus Metall und das Anschlagelement aus Kunststoff. Auch die Verwendung unterschiedlicher Kunststoffe für das Anschlagelement und das Hakenelement und die Herstellung der beiden Elemente in nacheinander folgenden Schritten in einem Mehrkomponentenspritzgussverfahren ist möglich. So wird beispielsweise das Anschlagelement aus Polyoxymethylen (POM) spritzgegossen und nachfolgend mit einem Polyamid, aus dem das Hakenelement hergestellt wird, zur Herstellung einer formschlüssigen Verbindung umspritzt.

Bei einer bevorzugten Ausgestaltungsform des erfindungsgemäßen Wandhakens besteht das Anschlagelement aus mehreren Teilen, insbesondere weist das Anschlagelement ein Eindring- und ein Abstandselement auf. Insbesondere sind die mehreren Teile miteinander verbindbar, beispielsweise mittels einer Steckverbindung, so dass die Länge des Anschlagelements an den gewünschten Abstand zwischen Hakenteil und Verankerungsgrund angepasst werden kann.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des oder der Ausführungsbeispiele, sondern einen grundsätzlich beliebigen Teil der gekennzeichneten Merkmale eines Ausführungsbeispiels gegebenenfalls in Kombination mit einem, mehreren oder allen Merkmalen eines oder mehrerer weiteren Ausführungsbeispiele aufweisen, sind möglich.

Die Erfindung wird nachfolgend anhand von drei in der Zeichnung dargestellten Ausführungsbeispielen näher erläutert. Es zeigen:
- Figur 1: einen ersten erfindungsgemäßen Wandhaken in einer Seitenansicht;
- Figur 2: den ersten erfindungsgemäßen Wandhaken in einer Schnittdarstellung;
- Figur 3: das Hakenelement des ersten erfindungsgemäßen Wandhakens in einer perspektivischen Schnittdarstellung;
- Figuren 4 bis 9: das Befestigen des ersten erfindungsgemäßen Wandhakens in einem Verankerungsgrund;
- Figur 10: einen zweiten erfindungsgemäßen Wandhaken in einer perspektivischen Schnittdarstellung; und
- Figur 11: das Hakenelement des ersten erfindungsgemäßen Wandhakens in einer Schnittdarstellung.

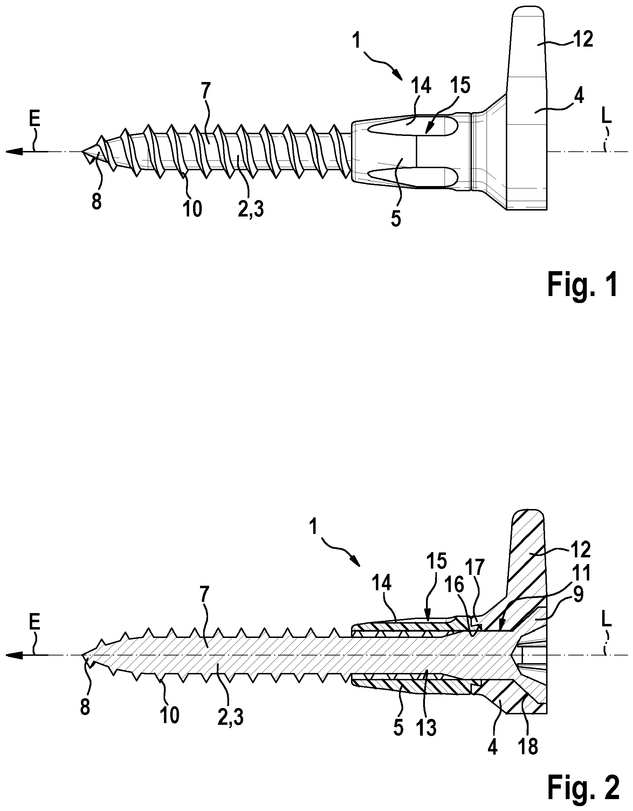

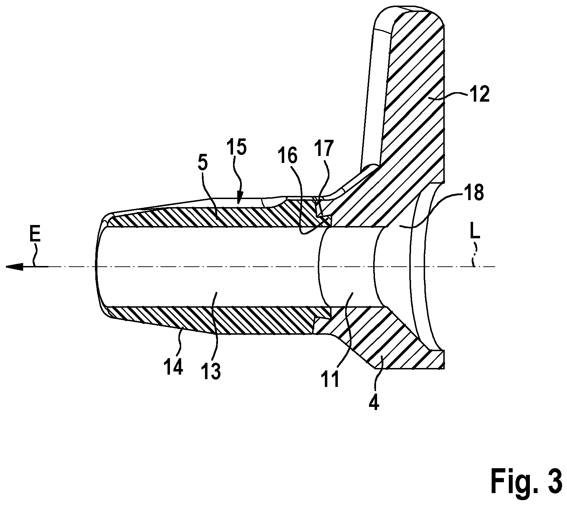

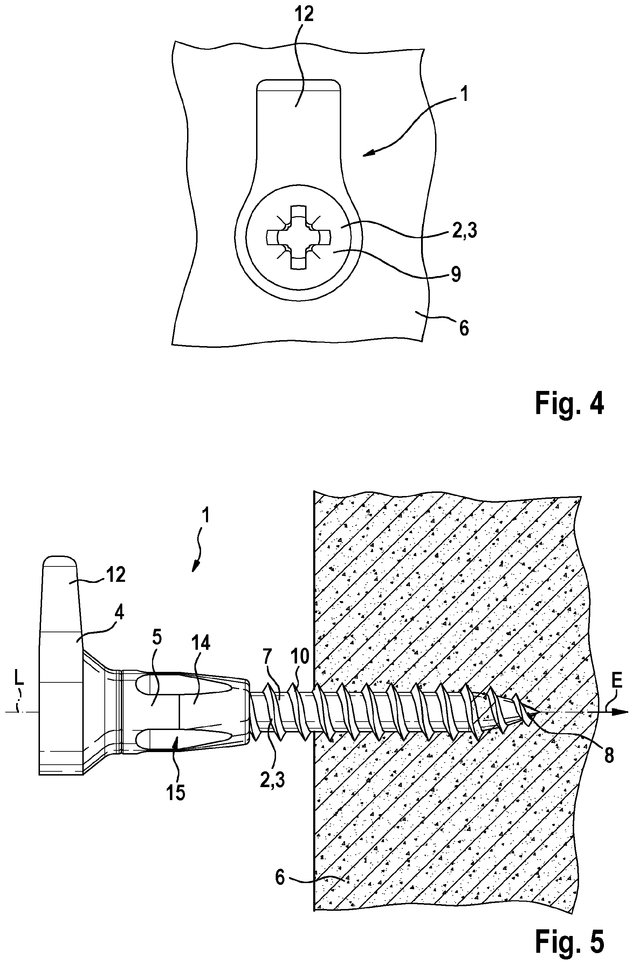

In den Figuren 1 bis 9 ist ein erster erfindungsgemäßer Wandhaken 1 dargestellt. Der Wandhaken 1 besteht aus einer Schraube 2 aus Stahl als Befestigungselement 3, einem Hakenelement 4 und einem Anschlagelement 5, das in Einbringrichtung E vor dem Hakenelement 4 angeordnet ist. Die Einbringrichtung E ist die Richtung, in die die Schraube 2 in einen Verankerungsgrund 6 (siehe Figuren 4 bis 9) eingeschraubt wird. Ein Schaft 7 der Schraube 2 erstreckt sich entlang einer Längsachse L des Wandhakens 2 und weist an seinem in Einbringrichtung E vorderen Ende eine Schraubenspitze 8 und an seinem hinteren Ende einen Schraubenkopf 9 mit einer Werkzeugaufnahme für ein Drehwerkzeug (nicht dargestellt) auf. Ein Gewinde 10 erstreckt sich von der Schraubenspitze 8 über einen Großteil des Schafts 7 hin zum Schraubenkopf 9. Der Schaft 7 der Schraube 2 ist in eine hülsenartige Schaftaufnahme 11 des Hakenelements 4 eingesteckt, die den Schaft 7 in Umfangsrichtung vollständig umschließt. Die Schaftaufnahme 11 durchdringt das Hakenelement 4 in Richtung der Längsachse L vollständig und weist in einem hinteren Bereich eine konische Aufweitung 18 zur Aufnahme des Schraubenkopfs 9 auf. An der Schaftaufnahme 11 ist einstückig ein quaderförmiger Kragarm als Hakenteil 12 angeordnet, das von der Schaftaufnahme 11 radial zur Längsachse L auf eine Seite nach außen absteht. In Einbringrichtung E ist vor dem Hakenelement 4 das Anschlagelement 5 angeordnet, das sich parallel zur Längsachse L vom Hakenelement 4 weg erstreckt. Die Erstreckung des Anschlagelements 5 in Richtung der Längsachse L ist ungefähr dreimal so groß wie seine Erstreckung radial zur Längsachse L, die dem Radius eines Umkreises um das Anschlagelement 5 entspricht, der in einer Radialebene zur Längsachse und dessen Mittelpunkt auf der Längsachse liegt. Dagegen ist die radiale Erstreckung des Hakenteils 12 mehr als dreimal so groß, wie die des Anschlagelements 5, so dass beispielsweise eine Öse eines Bildes (nicht dargestellt) auf dem Anschlagelement 5 aufliegen kann und durch das Hakenteil 12 gegen ein Herabrutschen entgegen der Einbringrichtung E vom Wandhaken 1 gesichert ist.

Das Anschlagelement 5 ist eine hohlzylindrische Hülse, die einen zylindrischen Durchgang 13 für den Schaft 7 der Schraube 2 aufweist. Das Anschlagelement 5 verjüngt sich an seinem dem Hakenteil 12 abgewandten, in Einbringrichtung E vorderen Ende konisch beziehungsweise im Bereich von Rippen 14 keilförmig. Die Rippen 14 sind an der Oberfläche des Anschlagelements 5 angeordnet und verlaufen, ebenso wie in Umfangsrichtung zwischen den Rippen 14 angeordnete Nuten 15, in Richtung der Längsachse L. An seinem in Einbringrichtung E hinteren Ende weist das Anschlagelement 5 eine trapezförmige umlaufende Feder 16 auf, deren radiale Ausdehnung zur Längsachse L entgegen der Einbringrichtung E zunimmt und hinterschneidend in eine korrespondierende Gegenfeder 17 des Hakenelements 4 eingreift, so dass das Anschlagelement 5 und das Hakenelement 4 formschlüssig axialfest miteinander verbunden sind. Durch die formschlüssige Verbindung sind das Anschlagelement 5 und das Hakenelement 4 aber drehbar verbunden, das heißt, dass das Hakenteil 12 relativ zum Anschlagelement 5 um die Längsachse L drehbar ist. Das Hakenelement 4 und das Anschlagelement 5 bestehen aus unterschiedlichen Materialien. Das Hakenelement 4 ist einstückig aus einem glasfaserverstärkten Polyamid hergestellt, während das Anschlagelement 5 aus einem Polyoxymethylen (POM) besteht. Das Anschlagelement 5 wird gemeinsam mit dem Hakenelement 4 in einem Zweikomponentenspritzgussverfahren hergestellt, wobei zunächst das Anschlagelement 5 gespritzt und dann das Anschlagelement 5 im Bereich seiner Feder 16 vom Material des Hakenelements 4 umspritzt wird, wobei die Gegenfeder 17 um die Feder 16 geformt wird.

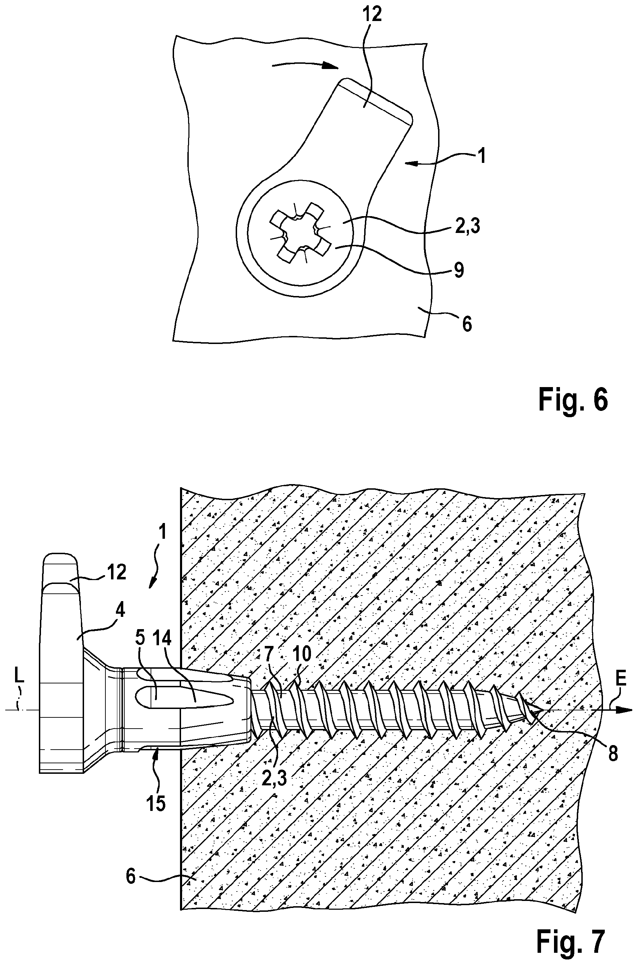

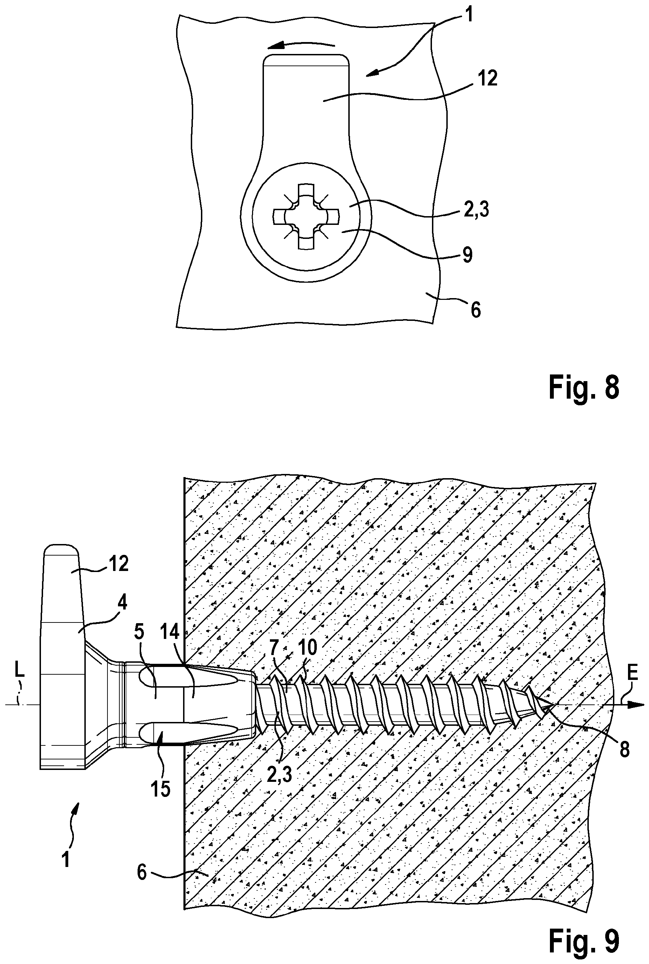

Zum Befestigen des Wandhakens 1 in einem Verankerungsgrund 6, im Ausführungsbeispiel ein Holzbalken, wird zunächst die Schraube 2 in den Verankerungsgrund 6 eingeschraubt, wie dies in den Figuren 4 und 5 dargestellt ist. Der Verankerungsgrund 6 ist Teil einer Wand und in diesem Fall ist das Hakenteil 12 zunächst, wie in Figur 4 zu sehen, lotrecht nach oben ausgerichtet. In dieser Stellung wird das Hakenteil 12 beim Einschrauben der Schraube 2 in den Verankerungsgrund 6 von einem Anwender zunächst in der gewünschten Ausrichtung gehalten. Beim weiteren Einschrauben wird mit der Schraube 2 das Anschlagelement 5 in den Verankerungsgrund 6 eingebracht, so dass es mit dem Verankerungsgrund 6 in Eingriff gelangt. Durch die dorn- oder nagelartige Verjüngung des vorderen Endes des Anschlagelements 5 kann das Anschlagelement 5 leicht in den Holzbalken als Verankerungsgrund 6 eindringen. Dabei wirken die Nuten 15 zusammen mit den Rippen 14 als Drehsicherungselemente, die ein Verdrehen des Anschlagelements 5 um die Längsachse L verhindern (Figuren 6 und 7). Das Anschlagelement 5 ist dann drehfest mit dem Verankerungsgrund 6. Die Schraube 2 wird soweit in den Verankerungsgrund 6 eingeschraubt, bis der gewünschte Abstand des Hakenteils 12 vom Verankerungsgrund 6 erreicht ist (Figur 7). Durch das weitere Eindringen des Anschlagelements 5 in den Verankerungsgrund 6 erhöht sich aufgrund des größer werdenden Querschnitts des Anschlagelements 5 der Widerstand gegen das Eindringen in den Verankerungsgrund 6, so dass der Schraubenkopf 9 stärker gegen die konische Aufweitung 18 gepresst wird. Dies führt dazu, dass das Hakenelement 4 beim Einschrauben der Schraube 2 um die Längsachse L unbeabsichtigt verdreht werden kann (Figur 6) und es nicht mehr, wie gewünscht, nach oben ausgerichtet ist. Da das Hakenelement 4 und das Anschlagelement 5 relativ zueinander drehbar ausgebildet sind, kann das Hakenelement 4 nun relativ zum drehfest mit dem Verankerungsgrund 6 verbundenen Anschlagelement 5 um die Längsachse L gedreht und in die gewünschte Position ausgerichtet werden, wie dies in den Figuren 8 und 9 dargestellt ist. Das Hakenteil 12 des Wandhakens 1 weist nun die gewünschte Ausrichtung und den gewünschten Abstand auf. Abstand und Ausrichtung sind unabhängig voneinander einstellbar. Das Anschlagelement 5 wirkt als Anschlag und Widerlager für das Hakenelement 4, das mit der Schraube 2 gegen das Anschlagelement 5 gepresst wird, so dass zwischen dem Hakenelement 4 und dem Anschlagelement 5 eine Reibkraft wirkt, die nach dem Ausrichten des Hakenteils 12 verhindert, dass das Hakenteil 12 seine Ausrichtung durch Erschütterungen oder Berührungen, wie diese beispielsweise beim Einhängen einer Öse eines aufzuhängenden Bildes auf das Hakenteil 12 einwirken können, verändert.

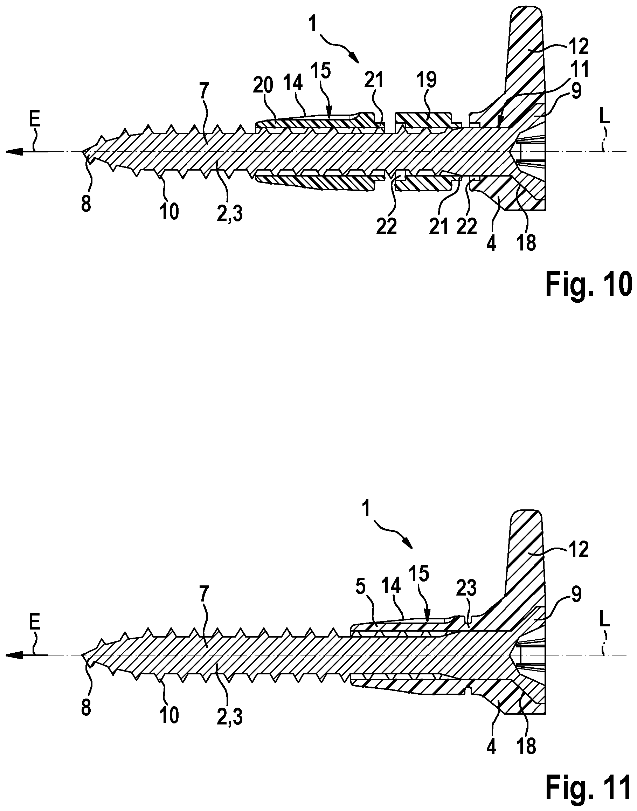

Die in den Figuren 10 und 11 dargestellten weiteren Ausführungsbeispiele weisen große Gemeinsamkeiten mit dem ersten Ausführungsbeispiel auf. Funktional gleiche Bauteile sind daher mit gleichen Bezugszeichen bezeichnet und die folgende Beschreibung beschränkt sich auf die Unterschiede zum ersten Ausführungsbeispiel.

Der in Figur 10 als zweites Ausführungsbeispiel dargestellte erfindungsgemäße Wandhaken 1 unterscheidet sich vom Wandhaken 1 des ersten Ausführungsbeispiels der Figuren 1 bis 9 im Wesentlichen durch zwei Merkmale: Zum einen besteht das Anschlagelement 5 aus mehreren Teilen. Ein zum Anschlagelement 5 gehörendes Abstandselement 19 ist in Einbringrichtung E vor dem Hakenelement 4 und hinter einem Vorderteil 20 des Anschlagelements 5 angeordnet, das die Verjüngung und die Rippen 14 und Nuten 15 zur Drehsicherung aufweist. Durch das Einbringen des Abstandselements 19 zwischen das Vorderteil 20 und das Hakenelement 4 kann das Hakenteil 12 in einem größeren Abstand vom Verankerungsgrund 6 angeordnet werden. Zum anderen sind das Vorderteil 20, das Abstandselement 19 und das Hakenelement 4 reibschlüssig, aber nicht formschlüssig verbunden. Bei diesem Ausführungsbeispiel greifen korrespondierende hohlzylindrische Abschnitte 21 reibend in korrespondierende hohlzylindrische Ausnehmungen 22 ein, derart, dass sie die drei Teile 4, 19, 20 reibschlüssig axialfest und drehbar miteinander verbinden.

Dagegen ist das Hakenelement 4 mit dem Anschlagelement 5 des Wandhakens 1 des in Figur 11 dargestellten dritten Ausführungsbeispiels einstückig aus einem Kunststoff hergestellt, so dass das Anschlagelement 5 und das Hakenelement 4 aus dem gleichen Material bestehen, nämlich aus glasfaserverstärktem Polyamid. Das Hakenelement 4 und das Anschlagelement 5 sind mittels einer Solltrennstelle 23 miteinander verbunden, die als Abschnitt mit stark reduzierter Wandstärke zischen dem Hakenelement 4 und dem Anschlagelement 5 ausgebildet ist. Die die Solltrennstelle 23 bildende Spritzhaut verbindet die beiden Elemente 4, 5 axialfest und verliersicher. Wird beim Befestigen allerdings das Hakenelement 4 relativ zum drehfest mit dem Verankerungsgrund 6 verbundenen Anschlagelement 5 verdreht, so wird die Solltrennstelle 23 durchtrennt, so dass das Hakenelement 4 zum Ausrichten relativ zum Anschlagelement 5 um die Längsachse L gedreht werden kann. Dabei kann das Durchtrennen bereits beim Einschrauben der Schraube 2 in den Verankerungsgrund 6 erfolgen, insbesondere durch das Anliegen des Schraubenkopfs 9 an der konischen Ausweitung 18, so dass das Hakenelement 4 aufgrund der wirkenden Reibung zwischen Schraubenkopf 9 und konischer Aufweitung 18 mit der Schraube 2 mitdreht.

### Bezugszeichenliste

- 1: Wandhaken
- 2: Schraube
- 3: Befestigungselement
- 4: Hakenelement
- 5: Anschlagelement
- 6: Verankerungsgrund
- 7: Schaft
- 8: Schraubenspitze
- 9: Schraubenkopf
- 10: Gewinde
- 11: Schaftaufnahme
- 12: Hakenteil
- 13: Durchgang
- 14: Rippe
- 15: Nut
- 16: Feder
- 17: Gegenfeder
- 18: konische Aufweitung
- 19: Abstandselement
- 20: Vorderteil des Anschlagelements 5
- 21: hohlzylindrischer Abschnitt
- 22: hohlzylindrische Ausnehmung
- 23: Solltrennstelle
- E: Einbringrichtung
- L: Längsachse

## Patentansprüche

1. Wandhaken (1) zum Befestigen in einem Verankerungsgrund (6),
mit einem Befestigungselement (3) und einem Hakenelement (4), wobei das Befestigungselement (3) einen sich entlang einer Längsachse (L) erstreckenden lang gestreckten Schaft (7) aufweist, und
wobei das Hakenelement (4) eine Schaftaufnahme (11) zur Aufnahme des Befestigungselements (3) und ein Hakenteil (12) aufweist, das von der Schaftaufnahme (11) radial zur Längsachse (L) auf eine Seite nach außen absteht, wobei der Wandhaken (1) ein Anschlagelement (5) umfasst, das sich parallel zur Längsachse (L) vom Hakenelement (4) weg erstreckt und eine Erstreckung radial zur Längsachse (L) aufweist, die kleiner als die des Hakenteils (12) ist,
wobei das Hakenelement (4) mit dem Befestigungselement (3) gegen das Anschlagelement (5) verspannbar ist, derart, dass zwischen dem Hakenelement (4) und dem Anschlagelement (5) eine Reibkraft wirkt, die ein ungewolltes Verdrehen des Hakenteils (12) um die Längsachse (L) verhindert, und
wobei das Hakenteil (12) relativ zum Anschlagelement (5) um die Längsachse (L) und somit um den Schaft (7) drehbar ist oder wobei das Anschlagelement (5) mit dem Hakenelement (4) mittels einer Solltrennstelle (23) trennbar verbunden ist derart, dass die Solltrennstelle durch Drehen um die Längsachse (L) trennbar ist **dadurch gekennzeichnet, dass** sich das Anschlagelement (5) an seinem dem Hakenteil (12) abgewandten Ende keil- oder hülsenförmig verjüngt.

2. Wandhaken nach Anspruch 1, **dadurch gekennzeichnet, dass** die Länge des Anschlagelements (5) in Richtung der Längsachse (L) größer als seine Erstreckung radial zur Längsachse (L) ist.

3. Wandhaken nach Anspruch 1 oder 2, **dadurch gekennzeichnet, dass** das Anschlagelement (5) in Richtung der Längsachse (L) verlaufende Nuten (15) und/oder Rippen (14) zur Drehsicherung aufweist.

4. Wandhaken nach einem der vorstehenden Ansprüche, **dadurch gekennzeichnet, dass** das Anschlagelement (5) mit dem Hakenelement (4) mittels einer reib- und/oder formschlüssigen Verbindung verbunden ist.

5. Wandhaken nach einem der vorstehenden Ansprüche, **dadurch gekennzeichnet, dass** das Anschlagelement (5) und das Hakenelement (4) aus dem gleichen Material, insbesondere aus Kunststoff hergestellt sind.

6. Wandhaken nach einem der Ansprüche 1 bis 4, **dadurch gekennzeichnet, dass** das Anschlagelement (5) und das Hakenelement (4) aus unterschiedlichen Materialien bestehen.

7. Wandhaken nach einem der vorstehenden Ansprüche, **dadurch gekennzeichnet, dass** das Anschlagelement (5) aus mehreren Teilen besteht.

8. Befestigungsanordnung mit einem Wandhaken (1) nach einem der vorstehenden Ansprüche und einem Verankerungsgrund (6), in dem der Wandhaken (1) befestigt ist, wobei das Anschlagelement (5) in den Verankerungsgrund (6) zumindest teilweise eingebracht ist und dass das Hakenteil (12) relativ zum Anschlagelement (5) um die Längsachse (L) drehbar ist.

9. Verfahren zum Befestigen des Wandhakens (1) nach einem der Ansprüche 1 bis 7 in einem Verankerungsgrund (6) mit folgenden Schritten:
a) Einbringen des Befestigungselements (3) in den Verankerungsgrund (6), derart, dass das Anschlagelement (5) in Eingriff mit dem Verankerungsgrund (6) gelangt, und
b) Drehen und Ausrichten des Hakenteils (12) relativ zum Anschlagelement (5) nach dem zumindest teilweisen Einbringen des Anschlagelements (5) in den Verankerungsgrund (6).

10. Verfahren nach Anspruch 9, mit dem Schritt:
c) Durchtrennen einer Solltrennstelle (23), die zwischen dem Anschlagelement (5) und dem Hakenelement (4) am Wandhaken (1) angeordnet ist, beim oder nach dem Einbringen des Befestigungselements (3) und des Anschlagselements (5) in den Verankerungsgrund (6).

11. Verfahren nach Anspruch 10, wobei das Befestigungselement (3) eine Schraube (2) ist und wobei das Durchtrennen der Solltrennstelle (23) beim Einschrauben der Schraube (2) in den Verankerungsgrund (6) erfolgt.

## Claims

1. Wall hook (1) for fastening in an anchoring base (6),
comprising a fastening element (3) and a hook element (4), the fastening element (3) having an elongate shaft (7) extending along a longitudinal axis (L), and
the hook element (4) having a shaft receptacle (11) for receiving the fastening element (3) and a hook part (12) which projects outward from the shaft receptacle (11) radially with respect to the longitudinal axis (L) on one side, the wall hook (1) comprising a stop element (5) which extends away from the hook element (4) in parallel with the longitudinal axis (L) and has an extension radially with respect to the longitudinal axis (L), which extension is smaller than that of the hook part (12),
it being possible for the hook element (4) to be clamped with the fastening element (3) against the stop element (5) such that a frictional force acts between the hook element (4) and the stop element (5), which frictional force prevents the hook part (12) from unintentionally rotating about the longitudinal axis (L), and
the hook part (12) being rotatable relative to the stop element (5) about the longitudinal axis (L) and thus about the shaft (7) or the stop element (5) being detachably connected to the hook element (4) by means of a predetermined separation point (23) such that the predetermined separation point can be separated by rotating about the longitudinal axis (L), **characterized in that** the stop element (5) tapers at its end facing away from the hook part (12) so as to form a wedge or sleeve.

2. Wall hook according to claim 1, **characterized in that** the length of the stop element (5) in the direction of the longitudinal axis (L) is greater than its extension radially with respect to the longitudinal axis (L).

3. Wall hook according to either claim 1 or claim 2, **characterized in that** the stop element (5) has grooves (15) and/or ribs (14) extending in the direction of the longitudinal axis (L) for securing against rotation.

4. Wall hook according to any of the preceding claims, **characterized in that** the stop element (5) is connected to the hook element (4) by means of a frictional and/or form-fitting connection.

5. Wall hook according to any of the preceding claims, **characterized in that** the stop element (5) and the hook element (4) are made of the same material, in particular of plastics material.

6. Wall hook according to any of claims 1 to 4, **characterized in that** the stop element (5) and the hook element (4) are made of different materials.

7. Wall hook according to any of the preceding claims, **characterized in that** the stop element (5) consists of a plurality of parts.

8. Fastening arrangement comprising a wall hook (1) according to any of the preceding claims and an anchoring base (6) in which the wall hook (1) is fastened, wherein the stop element (5) is at least partially introduced into the anchoring base (6) and in that the hook part (12) is rotatable relative to the stop element (5) about the longitudinal axis (L).

9. Method for fastening the wall hook (1) according to any of claims 1 to 7 in an anchoring base (6), comprising the following steps:
a) introducing the fastening element (3) into the anchoring base (6) such that the stop element (5) engages with the anchoring base (6), and
b) rotating and aligning the hook part (12) relative to the stop element (5) after the stop element (5) has been at least partially introduced into the anchoring base (6).

10. Method according to claim 9, comprising the following step:
c) severing a predetermined separation point (23) which is arranged between the stop element (5) and the hook element (4) on the wall hook (1) during or after the fastening element (3) and the stop element (5) have been introduced into the anchoring base (6).

11. Method according to claim 10, wherein the fastening element (3) is a screw (2) and wherein the predetermined separation point (23) is severed when the screw (2) is screwed into the anchoring base (6).

## Revendications

1. Crochet mural (1) pour la fixation dans un support d'ancrage (6),
comportant un élément de fixation (3) et un élément de crochet (4), l'élément de fixation (3) présentant une tige (7) allongée s'étendant le long d'un axe longitudinal (L), et
l'élément de crochet (4) présentant un réceptacle de tige (11) pour la réception de l'élément de fixation (3) et une partie formant crochet (12) qui fait saillie vers l'extérieur sur un côté à partir du réceptacle de tige (11), radialement par rapport à l'axe longitudinal (L), le crochet mural (1) comprenant un élément de butée (5) qui s'étend parallèlement à l'axe longitudinal (L) en s'éloignant de l'élément de crochet (4) et présente une extension, radiale par rapport à l'axe longitudinal (L), inférieure à celle de la partie formant crochet (12),
l'élément de crochet (4) pouvant être tendu avec l'élément de fixation (3) contre l'élément de butée (5), de telle façon qu'une force de friction agit entre l'élément de crochet (4) et l'élément de butée (5), laquelle force de friction empêche une rotation non souhaitée de la partie formant crochet (12) autour de l'axe longitudinal (L), et
la partie formant crochet (12) pouvant tourner par rapport à l'élément de butée (5) autour de l'axe longitudinal (L) et ainsi autour de la tige (7) ou l'élément de butée (5) étant relié de manière à pouvoir être séparé à l'élément de crochet (4) au moyen d'un point de séparation de consigne (23) de telle façon que le point de séparation de consigne peut être séparé par rotation autour de l'axe longitudinal (L), **caractérisé en ce que** l'élément de butée (5) se rétrécit en forme de coin ou de douille au niveau de son extrémité opposée à la partie formant crochet (12).

2. Crochet mural selon la revendication 1, **caractérisé en ce que** la longueur de l'élément de butée (5) dans la direction de l'axe longitudinal (L) est supérieure à son extension radiale par rapport à l'axe longitudinal (L).

3. Crochet mural selon la revendication 1 ou 2, **caractérisé en ce que** l'élément de butée (5) présente des rainures (15) et/ou des nervures (14) s'étendant dans la direction de l'axe longitudinal (L), destinées à la protection contre la rotation.

4. Crochet mural selon l'une des revendications précédentes,
**caractérisé en ce que** l'élément de butée (5) est relié à l'élément de crochet (4) au moyen d'une liaison par friction et/ou par complémentarité de forme.

5. Crochet mural selon l'une des revendications précédentes,
**caractérisé en ce que** l'élément de butée (5) et l'élément de crochet (4) sont fabriqués à partir du même matériau, en particulier à partir de matière plastique.

6. Crochet mural selon l'une des revendications 1 à 4,
**caractérisé en ce que** l'élément de butée (5) et l'élément de crochet (4) sont constitués de matériaux différents.

7. Crochet mural selon l'une des revendications précédentes,
**caractérisé en ce que** l'élément de butée (5) est constitué de plusieurs pièces.

8. Agencement de fixation comportant un crochet mural (1) selon l'une des revendications précédentes et un support d'ancrage (6) dans lequel le crochet mural (1) est fixé, l'élément de butée (5) étant introduit au moins partiellement dans le support d'ancrage (6), **et en ce que** la partie formant crochet (12) peut tourner autour de l'axe longitudinal (L) par rapport à l'élément de butée (5).

9. Procédé pour la fixation du crochet mural (1) selon l'une des revendications 1 à 7 dans un support d'ancrage (6), comportant les étapes suivantes :
a) introduction de l'élément de fixation (3) dans le support d'ancrage (6) de telle façon que l'élément de butée (5) entre en prise avec le support d'ancrage (6), et
b) rotation et orientation de la partie formant crochet (12) par rapport à l'élément de butée (5) après l'introduction au moins partielle de l'élément de butée (5) dans le support d'ancrage (6).

10. Procédé selon la revendication 9, comportant l'étape de :
c) sectionnement d'un point de séparation de consigne (23) qui est disposé sur le crochet mural (1) entre l'élément de butée (5) et l'élément de crochet (4), lors de l'introduction de l'élément de fixation (3) et de l'élément de butée (5) dans le support d'ancrage (6) ou après celle-ci.

11. Procédé selon la revendication 10, l'élément de fixation (3) étant une vis (2) et le sectionnement du point de séparation de consigne (23) se produisant lors du vissage de la vis (2) dans le support d'ancrage (6).
